# EUROPEAN PATENT SPECIFICATION

(11) **EP 3 005 326 B1**
(45) Date of publication and mention of the grant of the patent: **14.10.2020**
(21) Application number: 14731788.7
(22) Date of filing: 14.05.2014
(51) Int. Cl.: A47B 13/08, A47B 25/00, A63F 1/06, A63F 3/00, G07F 17/32, G06F 16/174

(54) **TABLE-TOP PAD, IN PARTICULAR FOR GAMING TABLES**
TISCHPLATTENAUFLAGE, INSBESONDERE FÜR SPIELTISCHE
TAPIS DE PLATEAU DE TABLE, EN PARTICULIER POUR TABLES DE JEU

(30) Priority: 29.05.2013 IT PN20130023
(43) Date of publication of application: 13.04.2016
(73) Proprietor: Stylgame Srl, 33097 Spilimbergo (PN) (IT)
(72) Inventor: IULITA, Luigi, I-33097 Spilimbergo (PN) (IT)
(74) Representative: Cragnolini, Sergio
(86) International application number: PCT/IB2014/061424
(87) International publication number: WO 2014/191860

(56) References cited:
- WO-A2-01/87438
- US-A1- 2004 160 005
- US-A1- 2005 280 211
- US-A1- 2006 208 422
- US-A1- 2010 105 485

## Description

The present disclosure is relative to a pre-formed table-top covering pad, in particular, but not exclusively, for traditional gaming tables used for playing poker or black-jack.

Generally, the traditional gaming tables include a playing top consisting of a suitably shaped wooden panel on which is applied a thin soft mat made of felt or foamed polymeric material having essentially the function of preventing or limiting the bouncing of the chips and dampening their noise, and of offering the players the traditional "resilient" response when they deal the cards and press them on the table; finally, the surface of the gaming table is covered with an decorative fabric on which may be printed, for example, the layout of the game, logos and slogans, or the name of the gaming house.

A finishing frame, preferably rubber-lined, may be applied on the perimeter of the playing top, framing the playing area of the same and providing a soft support on which the players can rest their wrists.

The operations required to apply the soft mat and the surface cloth to the playing top are normally carried out by an expert upholsterer who, after having spread both components on the surface of the table, turns down the edges under the playing top, and fixes them in place by means of staple guns.

Due to the often complex geometries of the gaming tables, which are provided for example with a recess for the croupier and various internal openings to insert the chip holders, these operations are rather complicated and time-consuming.

Obviously, the surface cloth is subject to wear; moreover, often it may be soiled with spilled drinks or damaged by cigarette ash. Thus it must be frequently replaced.

This, in addition to being a cost for the gaming house, also represents a loss in economic terms for the house since, until the upholsterer arrives and during the operations for changing the cloth, the gaming table remains unused.

As a partial solution of the above problems, the document WO01/87438 discloses a pre-formed flexible pad for gaming tables suitable to be spread on the playing top; said pad is made up of a soft mat, made of rubber or foam plastic material, on which is previously bonded or permanently joined a surface cloth, as is done in the production of mouse pads.

The resulting pad, already pre-cut to the size of the table on which it is to be applied, can be rolled up and thus easily carried and stored. When it is to be used, the unrolled pad is spread on the table-top and anchored to the edges of the table with suitable fixing means.

Although in this manner the times required to remove and replace the worn or damaged cloth have been considerably shortened, there remains the difficulty of having to accurately lay down the pad, suitably spreading it out so that the surface cloth is perfectly stretched; in addition, due to the flexibility of the pad, it can be accidentally wrinkled in the course of the game being played on its surface, causing the undesirable wrinkling of the cloth.
US 2005/0280211 A1 discloses gaming tablet including a planar tablet having an upper surface, a lower surface and a plurality of sides, a padding disposed over the planar tablet and, a covering material disposed over the padding. The covering material and padding provide a soft resilient covering allowing a dealer to position his thumbs under the cards for shuffling without lifting the cards. The planar tablet can be made of polymeric or composite materials. US 2006/0208422 A1 discloses a foldable game surface comprising a first support hingedly connected to at least a second support along at least one common edge; an elastomeric layer secured the entire top surface of the first and the second support; and a further layer secured to the top surface of the elastomeric layer and defining a playing surface.

The main objective of the present invention as defined in the enclosed claims is to overcome the drawbacks of the prior art by devising a covering pad for tables, in particular for gaming tables, that further simplifies the application of the surface cloths to the table top, so that their replacement can be an extremely fast and simple operation, as it can be carried out by anyone without requiring particular skills and/or attention.

Another purpose of the present invention as defined in the enclosed claims is to provide a pad for gaming tables that is versatile and that can be customized as required.

A further purpose of the invention as defined in the enclosed claims is to devise a table-top pad that is simple and economic to make with customary, well-known plants, machinery and equipment.

The above objective and purposes of the invention are achieved with a covering pad for tables, in particular gaming tables, as defined in claim 1. Further characteristics of the invention are defined in the subsequent dependent claims.

Advantages and advantageous characteristics of the table-top pad will become more evident from the description which follows, by way of non-limiting example, with reference to the enclosed figures, wherein:
figure 1 is a view from above of a table top on which is applied a pad according to the present invention;
figure 2 is a view in cross section B-B of the table top of figure 1;
figure 3 illustrates the circled detail of figure 2 suitably enlarged;
figure 4 is an exploded view of a table top to which is associated a pad according to the invention, and
figure 5 illustrates an enlarged detail of figure 4.

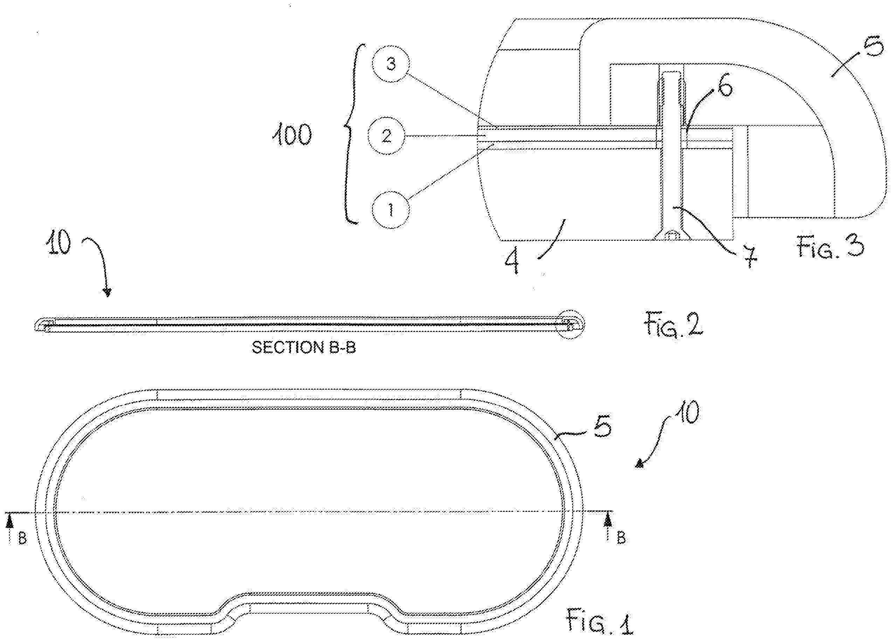

With reference to the above-mentioned figures, a table covering pad will be illustrated, in particular for gaming tables, according to the present invention. Generally, a traditional gaming table, for example one suitable to be used in a gaming house, includes one or more support elements (not shown) such as legs or blocks, that support a playing top 10. As can be seen in figures 1 and 2, said playing top 10 is made up of a plane or support 4 whereon is generally arranged a covering pad 100.

Said top 4 is made of any material suitable to support a covering pad, for example a suitably shaped wooden panel on the basis of the specificity of the game that will be played, and is directly joined to the support elements of said gaming table. A frame 5, made for example of wood, preferably covered with a layer of soft or elastically deformable material, can be applied to the perimetric edge of the playing top 10, to frame the playing area and provide a comfortable support on which the players can rest their wrists.

As can be better seen in figure 3, the playing pad 100 according to the present invention is made up of a plurality of layers of different materials, each having a specific function: in particular, the pad 100 includes a top cloth 3, a thin cushioning mat 2 and a semi-rigid support panel 1 .

Said top cloth 3 preferably consists of a wear-resistant fabric on which can be printed, for example, the different game layouts, logos and slogans, etc. The top cloth 3 is firmly attached with known and conventional means to said cushioning, elastically deformable, mat 2, made for example of natural or synthetic felt, and preferably of foamed polymeric material or rubber, having the function of preventing or limiting the bouncing of the chips and dampening the noise, as well as offering the players the traditional "resilient" response of the playing surface when they deal the cards and press them down on it.

According to an advantageous characteristic of the invention, the surface of said cushioning mat 2 opposite to the one on which the surface cloth 3 is attached is firmly associated to a thin, semi-rigid, support panel 1, pressed carton and suitably treated to obtain characteristics of water repellence and fire resistance. According to a non-claimed aspect, which does not form part of the invention, the support panel may consist of a composite polymeric material and/or suitably treated to obtain characteristics of water repellence and fire resistance.

Advantageously, unlike prior art pads, when the pad 100 of the present invention is associated to the base plane 4 of the table top, it is not necessary to resort to any specific tensioning operations since, thanks to the presence of the semi-rigid support panel 1, the pad 100 is already perfectly stretched; moreover, even during the playing actions, the support panel 1 prevents the pad from bulging or deforming locally, thus avoiding the consequent formation of undesired wrinkling of the surface cloth 3.

Preferably, a pad 100 made as disclosed above has an overall thickness of about 3 - 5 mm.

The production of said pad for gaming tables 100 is carried out industrially, forming large surfaces of the same with the help of suitable machinery that perfectly couple the different layers, in the order illustrated above, and taking care that the surface cloth 3 is perfectly tensioned.

Subsequently, the pad 100 can be cut out from this surface in the desired shape, matching substantially the shape of the table top 4, preferably using a precision laser cutting method. In this phase it is also possible to define openings in internal areas of the pad 100, where, for example, chip holders or other devices to be arranged in the playing area can be housed.

Alternatively, the pad 100 thus obtained can be advantageously shaped on-site, i.e. applied to a gaming table and subsequently cut, for example by means of a cutter, following the perimeter shape of the table top 4 whereon the pad is applied, possibly cutting on-site also the openings arranged in internal areas, making the operation of the application of the pad 100 fast and extremely easy.

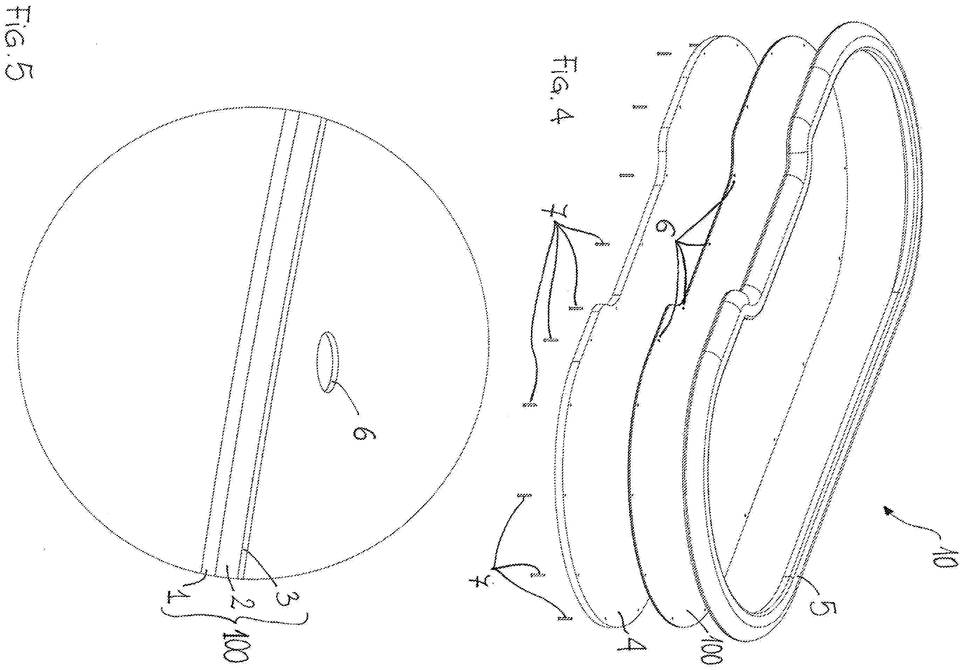

If necessary, as is better shown in figures 4 and 5, a plurality of suitably spaced holes 6 can be provided, preferably at the perimetric edges of the pad 100: said holes 6 are suitable to be crossed by a corresponding plurality of fastening means 7, such as appropriate pins, provided to join the outer frame 6 to the table top 4; however, the presence of said pins 7 does not have the function of tensioning the pad 100, since the latter, as already mentioned, includes a support panel 1 that keeps it constantly stretched and prevents any wrinkling of the same.

From the above, it is evident how a covering pad 100, in particular for gaming tables, according to the invention as recited in the enclosed claims achieves the initially foreseen purposes and advantages: in fact, thanks to the advantageous configuration of the pad 100, and in particular to the presence of a semi-rigid support panel 1 on which are attached, in order, the cushioning mat 2 and the surface cloth 3, the operations necessary to replace a damaged or worn surface cloth are further simplified, and may be carried out by anyone without requiring particular skills, and thus significantly lowering the relative replacement labour costs.

Moreover, thanks to the ease of applying and removing a gaming table pad 100, the times required for replacing the same can amount to only a few minutes, thus making up for the loss of income of the gaming house due to the necessity of carrying out the maintenance on the table. Furthermore, the mat can be replaced as soon as the first signs of wear are noticed on the surface cloth, thus without having to wait for more evident deterioration, which could hurt the prestige of the gaming house.

Also, a pad 100 according to the invention guarantees the greatest versatility in choosing the type of surface cloth, which is applied directly by the manufacturer based on the requirements of the customer.

It is also evident that pads 100, made as described above, are also interchangeable: in fact, the customer can keep in stock said pads 100 having different surface cloths 3, as he can quickly and easily replace them should he wish to change the decoration of the gaming house, for example in the preparation for a particular tournament.

Advantageously, the presence of said semi-rigid support panel 1 prevents the pad 100 from locally bulging, shifting or becoming deformed during the playing activities, thus avoiding any undesirable wrinkling of the surface cloth 3.

Naturally, the present invention is susceptible to many applications, modifications or variants without thereby departing from the scope of patent protection, as defined in the enclosed claims.

Furthermore, the materials and equipment used in the present invention, as well as the shapes and sizes of the individual component, can be the most suitable to meet the specific requirements, without departing from the scope of patent protection, as defined in the enclosed claims.

## Claims

1. A covering pad (100) for tables, in particular for gaming tables, suitable to be associated with a table top (4), said pad (100) comprising a surface cloth (3) attached to a cushioning mat (2), wherein said covering pad (100) is a pre-formed table-top covering pad (100), wherein said pad (100) comprises a semi-rigid support panel (1) firmly associated to the surface of said cushioning mat (2) opposite to the one on which said surface cloth (3) is attached, wherein said support panel (1) keeps said pad (100) constantly stretched and prevents any wrinkling of the same, and wherein said cushioning mat (2) and said surface cloth (3) are maintained stretched when said pad (100) is associated to said table top (4), **characterized in that** said pad being shaped so as to substantially match the shape of said top (4) and wherein said semirigid support panel consists of a single panel made from pressed carton and treated to provide characteristics of water repellence and fire resistance.

2. The covering pad (100) according to claim 1, wherein said pad (100) is already perfectly stretched when it is associated to a base plane (4) of the table top and any tensioning operation is not necessary when said pad (100) is associated to said base plane (4) due to the presence of said semi-rigid support panel (1).

3. The covering pad (100) according to anyone of the preceding claims, wherein said cushioning mat (2) is made of elastically deformable material, such as natural or synthetic felt or foamed polymeric material or rubber.

4. The covering pad (100) according to anyone of the preceding claims, comprising a plurality of through holes (6) arranged at the perimetric edge of the table top, suitable to be crossed through by a corresponding plurality of fastening means (7) to connect a frame (5) to the edges of said table top (4).

5. The covering pad (100) according to anyone of the preceding claims, having an overall thickness of 3 to 5 mm.

6. A gaming table comprising a covering pad (100) according to anyone of the preceding claims.

## Patentansprüche

1. Eine Abdeckauflage (100) für Tische, insbesondere für Spieltische, geeignet, mit einer Tischplatte (4) verbunden zu werden, wobei die Auflage (100) ein Oberflächentuch (3), verbunden mit einer Polstermatte (2), umfasst; wobei die Abdeckauflage (100) eine vorgeformte Tischplatten-Abdeckauflage (100) ist, wobei die Auflage (100) eine halbstarre Stützplatte (1) umfasst, fest verbunden mit der Oberfläche der Polstermatte (2) gegenüber derjenigen, an der das Oberflächentuch (3) befestigt ist; wobei die Stützplatte (1) die Auflage (100) permanent gedehnt hält und Faltenbildung derselben verhindert, und wobei die Polstermatte (2) und das Oberflächentuch (3) gedehnt gehalten werden, wenn die Auflage (100) mit der Tischplatte (4) verbunden ist; **dadurch gekennzeichnet, dass** die Auflage geformt ist, um im Wesentlichen zur Form der Tischplatte (4) zu passen; wobei die halbstarre Stützplatte aus einer einzigen Platte aus Presspappe besteht und behandelt ist, um Eigenschaften der Wasserabstoßung und Feuerbeständigkeit bereitzustellen.

2. Die Abdeckauflage (100) gemäß Anspruch 1, wobei die Auflage (100) bereits vollständig gedehnt ist, wenn sie mit einer Grundfläche (4) der Tischplatte verbunden wird, und aufgrund der Anwesenheit der halbstarren Stützplatte (1) kein Spannvorgang erforderlich ist, wenn die Auflage (100) mit der Grundfläche (4) verbunden wird.

3. Die Abdeckauflage (100) gemäß einem beliebigen der obigen Ansprüche, wobei die Polstermatte (2) aus elastisch verformbarem Material, wie zum Beispiel natürlichem oder synthetischem Filz oder geschäumtem Polymermaterial oder Gummi, besteht.

4. Die Abdeckauflage (100) gemäß einem beliebigen der obigen Ansprüche, die eine Vielzahl von Durchgangslöchern (6) umfasst, angeordnet an der Umfangskante der Tischplatte, geeignet, von einer Vielzahl von Befestigungsmitteln (7) durchquert zu werden, um einen Rahmen (5) mit den Kanten der Tischplatte (4) zu verbinden.

5. Die Abdeckauflage (100) gemäß einem beliebigen der obigen Ansprüche, die eine Gesamtdicke von 3 bis 5 mm hat.

6. Ein Spieltisch, der eine Abdeckauflage (100) gemäß einem beliebigen der obigen Ansprüche umfasst.

## Revendications

1. Tapis de revêtement (100) pour des tables, en particulier pour des tables de jeu, adapté pour être associé à un dessus de table (4), ledit tapis (100) comprenant un tissu de surface (3) fixé à une couche de rembourrage (2), dans lequel ledit tapis de revêtement. (100) est un tapis de revêtement (100) de dessus de table préformé, dans lequel ledit tapis (100) comprend un panneau de support semirigide (1) associé fermement à la surface de ladite couche de rembourrage (2) opposée à celle à laquelle est fixé le tissu de surface (3), dans lequel ledit panneau de support (1) maintient ledit tapis (100) constamment étiré et empêche tout plissement de celui-ci, et dans lequel ladite couche de rembourrage (2) et ledit tissu de surface (3) sont maintenus étirés lorsque ledit tapis (100) est associé audit dessus de table (4), **caractérisé en ce que** ledit tapis est formé de manière à s'adapter substantiellement à la forme dudit dessus (4) et dans lequel ledit panneau de support semirigide consiste en un seul panneau constitué de carton pressé et traité pour fournir des caractéristiques hydrophobes et ignifuges.

2. Tapis de revêtement (100) selon la revendication 1, dans lequel ledit tapis (100) est déjà étiré parfaitement lorsqu'il est associé à un plan de base (4) du dessus de table et aucune opération de tension n'est nécessaire lorsque ledit tapis (100) est associé audit plan de base (4) en raison de la présence dudit panneau de support semirigide (1) .

3. Tapis de revêtement (100) selon l'une quelconque des revendications précédentes, dans lequel ladite couche de rembourrage (2) est constituée d'un matériau élastiquement déformable, tel que du feutre naturel ou synthétique ou un matériau polymère expansé ou du caoutchouc.

4. Tapis de revêtement (100) selon l'une quelconque des revendications précédentes, comprenant une pluralité de trous de passage (6) disposés sur un bord périphérique du dessus de table, adaptés pour être traversés par une pluralité correspondante de moyens de fixation (7) pour relier un cadre (5) aux bords dudit dessus de table (4).

5. Tapis de revêtement (100) selon l'une quelconque des revendications précédentes, présentant une épaisseur globale de 3 à 5 mm.

6. Table de jeu comprenant un tapis de revêtement (100) selon l'une quelconque des revendications précédentes.
